# EUROPÄISCHE PATENTSCHRIFT

(11) **EP 2 222 685 B1**
(45) Veröffentlichungstag und Bekanntmachung des Hinweises auf die Patenterteilung: **02.07.2014**
(21) Anmeldenummer: 08868589.6
(22) Anmeldetag: 14.11.2008
(51) Int. Cl.: C07F 3/06

(54) **GRENZFLÄCHENAKTIVE METALLKOMPLEXE AUF TRÄGERMATERIALIEN ZUR ADSORPTION VON SCHADSTOFFEN SOWIE VERFAHREN ZUR HERSTELLUNG DER GETRÄGERTEN MATERIALIEN**
SURFACE-ACTIVE METAL COMPLEXES ON CARRIER MATERIALS FOR ADSORBING NOXIOUS SUBSTANCES AND METHOD FOR PRODUCING THE SUPPORTED MATERIALS
COMPLEXES MÉTALLIQUES TENSIOACTIFS SUR SUPPORTS POUR L'ADSORPTION DE SUBSTANCES TOXIQUES ET PROCÉDÉ DE FABRICATION DES MATÉRIAUX SUPPORTÉS

(30) Priorität: 21.12.2007 DE 102007062815; 25.02.2008 DE 102008010775
(43) Veröffentlichungstag der Anmeldung: 01.09.2010
(73) Patentinhaber: CAM-D Technologies GmbH, 45139 Essen (DE)
(72) Erfinder: KUHN, Hubert, 42697 Solingen (DE); THIE, Gordon, 45527 Hattingen (DE)
(74) Vertreter: Von Rohr Patentanwälte Partnerschaft mbB
(86) Internationale Anmeldenummer: PCT/EP2008/009631
(87) Internationale Veröffentlichungsnummer: WO 2009/083069

(56) Entgegenhaltungen:
- EP-A- 0 790 253
- EP-A- 1 213 344
- WO-A-03/102000
- WO-A-2007/122651
- DE-A1- 1 807 090
- US-A1- 2003 004 364
- US-A1- 2005 084 464
- ZA-A- 9 607 671
- DATABASE CA [Online] CHEMICAL ABSTRACTS SERVICE, COLUMBUS, OHIO, US; TOYAMA, YOSHIYUKI ET AL: "Reactions of methyl ricinoleate and methyl acetylricinoleate with mercuric acetate in hot acetic acid" XP002515787 gefunden im STN Database accession no. 1969:430023 -& FETTE, SEIFEN, ANSTRICHMITTEL , 71(2), 88-92 CODEN: FSASAX; ISSN: 0015-038X, 1969, XP009112523
- Legrum, Wolfgang: "Riechstoffe, zwischen Gestank und Duft : Vorkommen, Eigenschaften und Anwendung von Riechstoffen und deren Gemischen", 2011, Vieweg + Teubner, Wiesbaden ISBN: 978-3-8348-1245-2 page 170,

## Beschreibung

Die vorliegende Erfindung betrifft komplexierte Metallsalze auf Trägermaterialien, wobei die Metallsalze im folgenden auch als Metallkomplexe bezeichnet werden und mindestens einen Liganden sowie mindestens einem Komplexbildner umfassen und auf einem Trägermaterial aufgebracht sind, wobei sich derartige geträgerte Strukturen insbesondere zur chemischen Bindung von Schadstoffen und/oder geruchsbildenden Substanzen eignen; dabei können die Liganden der komplexierten Metallsalze insbesondere ein hydrophobes Kohlenstoffgerüst mit hydrophilen Gruppen aufweisen. Das mit dem Komplexbildner gebildete und auf einem geeigneten Trägermaterial abgeschiedene komplexierte Metallsalz als solches ist im allgemeinen wasserlöslich und grenzflächenaktiv. Als Komplexbildner werden wasserlösliche Säuren oder Salze von mindestens bifunktionellen Säuren oder auch Ethercarbonsäuren eingesetzt.

Insbesondere betrifft die vorliegende Erfindung geträgerte Strukturen, insbesondere zur chemischen Bindung und/oder zur Adsorption von Schadstoffen und/oder geruchsbildenden Substanzen, insbesondere mit Elektronendonoreigenschaften, welche ein komplexiertes Metallsalz auf einem Trägermaterial umfassen, sowie ein Verfahren zu deren Herstellung und ihre Verwendung sowie sie enthaltende Zusammensetzungen.

Es ist lange bekannt, daß Zinksalze von Fettsäuren, die auch als Zinkseifen bekannt sind, desodorierende Wirkung haben. Ein bekanntes Beispiel ist das Zinksalz der Rizinolsäure, das Zinkrizinoleat. Diese Zinksalze können Substanzen, wie beispielsweise Stickstoff enthaltende Substanzen, zu denen die Amine zählen, oder Schwefel enthaltende Substanzen, wie Thiole oder Mercaptane, wie auch Carbonsäuren, wie die geruchsintensiven Verbindungen Isovaleriansäure oder Buttersäure, chemisch binden und somit olfaktorisch deaktivieren. Daher finden diese Salze vor allem in Kosmetik- und sogenannten Homecare-Produkten Anwendung.

Die GB-PS 1 282 889 beschreibt die Verwendung von Zinksalzen der ungesättigten aliphatischen Hydroxycarbonsäuren mit wenigstens 17 C-Atomen, wie der Rizinolsäure, zur Anwendung als desodorierendes Mittel.

In der DE 40 14 055 A1 wird ein Mittel mit desodorierender Wirkung beschrieben, das auf dem Zinksalz der Ricinolsäure und/oder dem Zinksalz der Abietinsäure und/oder weiteren Zinksalzen anderer gesättigter oder ungesättigter hydroxylierter Fettsäuren mit 16 und mehr C-Atomen basiert, wobei des weiteren ein ethoxylierter Fettalkohol und ein tertiäres Amin enthalten sind.

Die EP 1 213 344 A2 betrifft den Einsatz von Metallsalzen einer unverzweigten oder verzweigten, ungesättigten oder gesättigten, ein- oder mehrfach hydroxylierten Fettsäure mit mindestens acht Kohlenstoffatomen und/oder einer Harzsäure mit Ausnahme der Alkalimetallsalze in Reinigungsmitteln für das maschinelle Geschirrspülen. Bevorzugt werden Metallsalze der Ricinolsäure und/oder der Abietinsäure eingesetzt, wobei die Verwendung von Zinkricinoleat und/oder Zinkabietat, insbesondere von Zinkricinoleat, besonders bevorzugt ist. Die einzelnen Komponenten der Geschirrreiniger können darüber hinaus auf Trägermaterialien aufgebracht sein und beispielsweise zu Tabletten verarbeitet werden.

Der vorliegenden Erfindung liegt nunmehr die Aufgabe zugrunde, Metallseifen oder Derivate von Metallseifen, die im folgenden auch als Metallsalze bezeichnet werden, mit der Fähigkeit zur Bindung von Schadstoffen und/oder geruchsbildenden Substanzen auf Trägermaterialien bereitzustellen, die grenzflächenaktiv und zudem wasserlöslich sind.

Ferner sollen ein Verfahren zur Herstellung der Metallseifen oder Derivate derartiger Metallseifen auf Trägermaterialien als auch diese enthaltende Zusammensetzungen zur Verfügung gestellt werden.

Zur Lösung des zuvor geschilderten Problems schlägt die vorliegende Erfindung geträgerte Strukturen, insbesondere zur chemischen Bindung und/oder zur Adsorption von Schadstoffen und/oder geruchsbildenden Substanzen insbesondere mit Elektronendonoreigenschaften, welche ein komplexiertes Metallsalz auf einem Trägermaterial umfassen, d. h. also mit anderen Worten auf einem Träger aufgebrachte komplexierte Metallsalze, nach Anspruch 1 sowie ein Herstellungsverfahren hierfür nach Anspruch 3 vor. Weiterer Gegenstand der vorliegenden Erfindung ist zudem eine Zusammensetzung nach Anspruch 6 sowie die Verwendung nach Anspruch 7 bzw. 8. Weitere, vorteilhafte Ausgestaltungen sind jeweils Gegenstand der betreffenden Unteransprüche.

Gegenstand der vorliegenden Erfindung gemäß einem ersten Erfindungsaspekt sind somit komplexierte Metallsalze, welche im folgenden auch als Metallkomplexe bezeichnet werden, auf geeigneten Trägerstrukturen (d. h. also geträgerte Strukturen auf Basis komplexierter Metallsalzen auf geeigneten Trägermaterialien), wobei die komplexierten Metallsalze mindestens einen Liganden sowie mindestens einen Komplexbildner aufweisen, insbesondere wobei diese komplexierten Metallsalze wasserlöslich und/oder grenzflächenaktiv ausgebildet sind und diese komplexierten Metallsalze insbesondere zur chemischen Bindung bzw. Adsorption von Schadstoffen und/oder geruchsbildenden Substanzen geeignet sind. Die Liganden weisen ein hydrophobes Kohlenstoffgerüst mit hydrophilen Gruppen auf, insbesondere eine hydrophobe Alkylkette mit hydrophilen Gruppen. Die mit dem Komplexbildner gebildeten komplexierten Metallsalze sind (im Unterschied zu den nichtkomplexierten reinen Metallsalzen, welche wasserunlöslich sind) wasserlöslich. Als Komplexbildner werden insbesondere wasserlösliche Säuren oder Salze von mindestens bifunktionellen Säuren oder auch Ethercarbonsäuren eingesetzt.

Die vorliegende Erfindung betrifft insbesondere auf Trägermaterialien aufgebrachte komplexierte Metallsalze mit Liganden und mindestens einem Komplexbildner zur chemischen Bindung von Schadstoffen und/oder geruchsbildenden Substanzen, wobei die Liganden ein hydrophobes Kohlenstoffgerüst mit hydrophilen Gruppen aufweisen. Das mit dem Komplexbildner gebildete komplexierte Metallsalz ist wasserlöslich und grenzflächenaktiv. Als Komplexbildner werden wasserlösliche Säuren oder Salze von mindestens bifunktionellen Säuren oder auch Ethercarbonsäuren eingesetzt.

Insbesondere ist Gegenstand der Erfindung ein komplexiertes Metallsalz mit Liganden auf einem Trägermaterial, insbesondere zur chemischen Bindung von Schadstoffen und/oder geruchsbildenden Substanzen, insbesondere solchen mit Elektronendonoreigenschaften. Dabei werden als Schadstoffe insbesondere aliphatische und aromatische Stickstoffverbindungen, wie Amine, Ammoniak, Stickoxide, Nitrate, Nitrite etc., verstanden; dies sind beispielsweise Verbindungen der nachfolgenden, allgemeinen Formeln, wobei die aliphatischen und aromatischen Reste durch R symbolisiert sind: NH₃, RNH R₂NH, R₃N, NₓO_{y}, RNO₂, RNO₃⁻, NO₂⁻, NO₃⁻. Weitere Schadstoffe können aliphatische und aromatische Schwefelverbindungen sein, wie Schwefelwasserstoff, Thiole, Thioether, Sulfonate, Sulfite und Sulfate, die idealisiert durch nachfolgende Formeln dargestellt werden, wobei die aliphatischen und aromatischen Reste durch R symbolisiert sind: H₂S, RSH, R₂S, RSO₃H, RSO₄H, SO₃²⁻, SO₄²⁻. Im Rahmen der vorliegenden Erfindung werden unter Schadstoffen auch aliphatische und/ oder aromatische Carbonsäuren R-COOH mit R gemäß vorgenannter Bedeutung und/oder aliphatische und aromatische Phosphorverbindungen und anorganische Phosphorverbindungen verstanden.

Erfindungsgemäß ist das unkomplexierte Metallsalz bestehend aus Metall und Ligand wasserunlöslich.

Als Liganden im Sinne der vorliegenden Erfindung gelten Verbindungen mit einem hydrophoben Kohlenstoffgerüst mit hydrophilen Gruppen, die insbesondere monofunktionell als Ligand mit dem Metallkation ein Metallsalz bilden. Bevorzugte Liganden umfassen eine hydrophobe Alkylkette mit hydrophilen Gruppen. In der Regel sind diese Liganden wasserunlöslich, zumindest sind die mit ihnen gebildeten erfindungsgemäßen Metallsalze, ohne Komplexbildner, wasserunlöslich.

Als Komplexbildner gemäß der Erfindung gelten Verbindungen, die eine koordinative und/oder ionische Bindung zwischen einem Akzeptor (LewisSäure) und einem Donor (Lewis-Base) ausbilden, wobei insbesondere bei der koordinativen Bindung die Bindungselektronen nur von einem der beiden Bindungspartner stammen und wobei die Komplexbildner gemäß der Erfindung einer wasserlöslichen Säure, einem Anion oder Salz einer mindestens bifunktionellen bis polyfunktionellen Säure oder Ethercarbonsäure entsprechen. Im Gegensatz zu den Liganden verfügen die Komplexbildner nur über ein relativ kleines Kohlenstoffgerüst, d.h. sie weisen in der Regel keine hydrophobe Alkylkette auf. Die genannten Komplexbildner bilden erfindungsgemäß mit einer ihrer Säurefunktionen eine koordinative und/oder ionische Bindung mit dem Metall aus.

Der Komplexbildner ist ausgewählt aus der Gruppe der wasserlöslichen Säuren, Anionen oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen der Säuren, Anionen und/oder Salze. Unter Polyethercarbonsäuren, insbesondere Ethercarbonsäure, werden Carbonsäuren der Konstitution Alkyl-(O-Alkyl)_{c}-COOH oder Alkyl-(O-Alkyl)_{c}-Alkyl-COOH mit c gleich 1 bis 200, insbesondere zwischen 1 bis 100, bevorzugt mit 1 bis 15 C-Atomen aufgefaßt.

Als Komplexbildner eignen sich insbesondere die folgenden Säuren oder deren Salze, wie Oxalsäure, Oxalate, wie Dinatriumoxalat, Weinsäure (meso, d und/oder l) bzw. deren Salze, Asparaginsäure, Ethercarbonsäuren, wie beispielsweise CH₃-(CH₂)₇₋(O-CH₂-CH₂)₈-COOH oder CH₃-(CH₂)₇-(O-CH₂-CH₂)₅-COOH, Ethylendinitrilotetraessigsäuresalz, wie das Ethylendinitrilotetraessigsäuretetranatriumsalz, oder 1-Hydroxyethyn-(1,1-diphosphonsäure)-dinatriumsalz.

Das komplexierte Metallsalz eignet sich in hervorragender Weise zur chemischen Bindung von Schadstoffen und/oder geruchsbildenden Substanzen, insbesondere von Schadstoffen und/oder geruchsbildenden Substanzen mit Elektronendonoreigenschaften. Besonders bevorzugt ist das komplexierte Metallsalz wasserlöslich, insbesondere durch die Komplexbildner, bevorzugt durch die deprotonierten Komplexbildner, die in Lösung als Anion oder als Salz vorliegen können und ihre desodorierenden Eigenschaften beibehalten. Aufgrund des Substitutionsmusters der Liganden, die über hydrophobe und hydrophile Molekülteile verfügen, wird das komplexierte Metallsalz zudem grenzflächenaktiv.

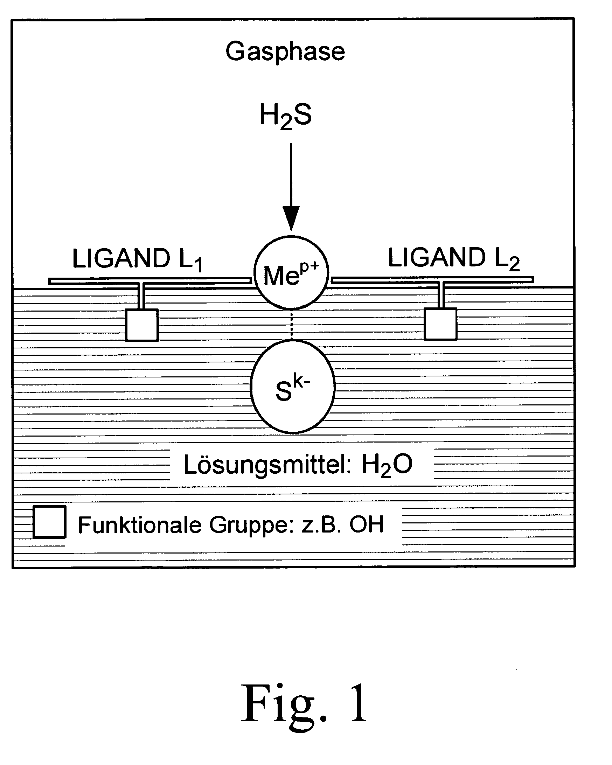

In der Figur 1 wird eine mögliche Struktur der grenzflächenaktiven Komplexe idealisiert, formalistisch dargestellt, und ihre Wirkungsweise an einem Beispiel eines generischen Metallsalzes L₁-Me-L₂ erläutert, das mit einem Komplexbildner S zu einem komplexierten Metallsalzanion [[L₁-Mc-L₂]-S^{k-}] umgesetzt wurde.

Gemäß dem ersten Gegenstand der Erfindung wird eine geträgerte Struktur zur chemischen Bindung und/oder zur Adsorption von Schadstoffen und/oder geruchsbildenden Substanzen mit Elektronendonoreigenschaften bereitgestellt, umfassend ein komplexiertes Metallsalz auf einem Trägermaterial, wobei das komplexierte Metallsalz der allgemeinen Formel I

[[Lₙ^{m-}(Me^{p+})]-Sₓ^{k-}]• zA^{y+} (I)

entspricht
- mit Me als Metall, wobei Me = Zink;
- mit p = 1 oder 2, wobei p der Oxidationszahl von Me entspricht;
- mit L als Ligand, wobei L gleich oder unterschiedlich ist, mit 1 ≤ n ≤ 20, wobei der Ligand L abgeleitet aus einem Molekül der allgemeinen Formel II

   B(R¹-D)₁ (II)

   ist
   - mit einer funktionellen Gruppe D = -COOH und/oder ein daraus abgeleitetes Anion oder Salz, wobei m in der Formel I der Ladungszahl der funktionellen Gruppe D als Anion oder im Salz mit m = 1, 2, 3 oder 4 entspricht und 1= 1 oder 2, und
   - wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B aufweist, und
   - mit B = OH, SO₃⁻, SO₃H, SO₄⁻, -OSO₃H, -COOH, -PO₃⁻, PO₃H, PO₄⁻, PO₄H, -O-(Alkyl-O-)ₐ-Alkyl-OH mit 1 ≤ a ≤ 200 und Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht;
- mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen dieser Säuren, Anionen und/oder Salze mit x = 1, 2, 3 oder 4 und wobei k der Ladungszahl des Anions von S entspricht mit 1 ≤ k ≤ 20;
- wobei A gleich oder verschieden ist und einem Wasserstoffproton, einem organischen Kation und/oder einem Metallkation entspricht, insbesondere ein Erdalkali- oder Alkalimetallkation ist, mit z = 1, 2, 3 oder 4 und wobei y der Ladungszahl von A entspricht mit y = 1 oder 2, wobei der Betrag von x • k = z • y ist,
wobei das komplexierte Metallsalz wasserlöslich ist.

Dabei ist es bevorzugt, wenn nur eine Säurefunktion des Komplexbildners, insbesondere die deprotonierte Säurefunktion als Anion, insbesondere des Komplexbildners S, direkt mit dem Metallatom, insbesondere mit Me, des Metallsalzes eine koordinative und/oder ionische Bindung ausbildet.

Wie zuvor beschrieben, ist erfindungsgemäß das unkomplexierte Metallsalz bestehend aus Metall und Ligand wasserunlöslich.

Erfindungemäß ist dagegen das komplexierte Metallsalz wasserlöslich. Zu diesem Zweck kann Komplexbildner eine Ethercarbonsäure verwendet werden, deren Anion und/oder ein Salz mit einer Säurefunktion mit dem Metall eine koordinative und/oder ionische Bindung ausbildet, wobei das Metallsalz insbesondere vor der Komplexierung wasserunlöslich ist.

Gleichfalls ist das komplexierte Metallsalz wasserlöslich, wenn der Komplexbildner mit einer Säurefunktion, insbesondere der Komplexbildner S, mit dem Metall eine koordinative und/oder ionische Bindung ausbildet und mindestens eine, insbesondere eine weitere, bevorzugt eine Mehrzahl, besonders bevorzugt alle verbliebenen Säurefunktionen des Komplexbildners deprotoniert oder als Anion in einem Salz, insbesondere mit A = organisches Kation oder Metallkation vorliegen, wobei besonders bevorzugt das Kation ein Alkali- oder Erdalkalikation, wie Li⁺, K⁺, Na⁺, Mg²⁺ oder Ca²⁺, ist oder alternativ das komplexierte Metallsalz, insbesondere als Anion in wäßriger Lösung, solvatisiert vorliegt. Die wäßrige Lösung, welche das komplexierte Metallsalz, insbesondere als Anion, enthält, ist vorzugsweise mit einer Base, wie NaOH, NH₄OH, Mg(OH)₂ oder einer anderen üblichen Base alkalisch eingestellt worden. Vorzugsweise liegt der pH-Wert im Bereich von größer 7 bis hin zu 12, bevorzugt zwischen 7,1 bis 11, besonders bevorzugt zwischen 7,5 und 8. Alternativ kann direkt der Komplexbildner als Salz, insbesondere als Alkali- oder Erdalkalisalz, zur Umsetzung mit dem Metallsalz mit Liganden in Gegenwart von Wasser umgesetzt werden.

Das komplexierte Metallsalz auf dem Trägermaterial ist insbesondere als

[[Lₙ^{m-}(Me^{p+})]-Sₓ^{k-}] • zA^{y+} oder [[Lₙ^{m-}(Me^{p+})]-Sₓ]

grenzflächenaktiv, insbesondere befindet es sich vorzugsweise an der Grenzfläche fest/flüssig oder fest/gasförmig und ist in der Lage, Schadstoffe oder Substanzen zu adsorbieren. So reduziert das komplexierte Metallsalz auf dem Trägermaterial die Oberflächenspannung, wenn es mit einer Flüssigkeit in Kontakt gebracht wird, gegebenenfalls kann bei seiner Herstellung oder seiner Verwendung ausgeprägte Schaumbildung auftreten.

Das erfindungsgemäße komplexierte Metallsalz auf einem Trägermaterial ist beispielsweise in der Lage, aus organischen Lösemitteln oder der Gasphase Schadstoffe und/oder geruchsbildende Substanzen, insbesondere mit Elektronendonoreigenschaften, chemisch zu binden bzw. zu adsorbieren. Aufgrund der Grenzflächenaktivität sind die komplexierten Metallsalze auf einem Trägermaterial befähigt, an der Grenzfläche Feststoff/Gasphase bzw. Feststoff/Luft und/oder Feststoff/Öl und/oder Feststoff/Lösungsmittel (wobei das Salz in dem Öl oder Lösemittel unlöslich sein sollte) Schadstoffe und/oder geruchsintensive Substanzen zu adsorbieren. Überraschenderweise sind die komplexierten Metallsalze auf dem Trägermaterial nur auf diese Weise in der Lage schwefel- und stickstoffenthaltende gasförmige Verbindungen sowie Carbonsäuren aus der Gasphase bzw. Atmosphäre effektiv chemisch zu binden. Die Konstitution der Substituenten und/oder die Konformation der Substituenten sind notwenig, um die komplexierten Metallsalze grenzflächenaktiv und wasserlöslich zu machen. An der Grenzfläche Feststoff/Luft oder Feststoff/Öl oder Feststoff/Lösungsmittel werden die Liganden vermutlich parallel zur Oberfläche des Trägermaterials an der Grenzfläche orientiert, wodurch das Metallatom sterisch für die koordinative und/oder ionische Bindung mit den Schadstoffmolekülen zugänglich wird.

Erfindungsgemäß liegt das komplexierte Metallsalz auf dem Trägermaterial, insbesondere gemäß der allgemeinen Formel I

[[Lₙ^{m-}(Me^{p+})]-Sₓ^{k-}] • zA^{y+} oder [[Lₙ^{m-}(Me^{p+})]-Sₓ]

als Feststoff vor.

Als Trägermaterial kommen generell alle Materialien in Betracht: Dies kann neben einem Feststoff aus einem organischen oder anorganischen Material, auch ein Kompositmaterial oder ein organisch-anorganisches Hybridmaterial sein. Bevorzugt werden mikro- und/oder nanostrukturierte Trägermaterialien eingesetzt. Aber auch textile und nichttextile Materialien, wie Fasern, gewebte Matten, Papier, Pappe oder dergleichen, können mit den komplexen Metallsalzen modifiziert und/oder behandelt werden. Bevorzugte Trägermaterialien sind Silikate, Siliziumdioxid, Metalloxide, wie Titandioxid, Ton, Glas, organische Polymere, Aktivkohle, Zeolithe oder Harze. Weitere Substrate, die als Trägermaterial dienen können sind Pappen oder Kunststoffe sowie weitere generell denkbare Trägermaterialien, auf denen die komplexierten Metallsalze aufgebracht werden können. Gemäß einer besonderen Ausführungsform können die Trägermaterialien partikulär bzw. teilchenförmig (z. B. als organisch oder anorganisch basierte Feststoffkügelchen oder -tröpfchen, Pellets, Granulate etc.) ausgebildet sein; auf diese Weise entstehen mit dem komplexierten Metallsalz beladene Teilchen bzw. Partikel, insbesondere wobei die Teilchengrößen in weiten Bereichen variieren können (z. B. im Bereich von 0,001 µm bis 50 mm, insbesondere 0,01 µm bis 20 mm, vorzugsweise 0,1 µm bis 10 mm, besonders bevorzugt 0,1 µm bis 1 mm).

Gegenstand der Erfindung ist auch eine Zusammensetzung, enthaltend das komplexierte Metallsalz auf einem Trägermaterial, das auch als geträgertes komplexiertes Metallsalz bezeichnet wird, insbesondere dargestellt durch die Fromel [[Lₙ^{m-}(Me^{p+})]-Sₓ^{k-}]• zA^{y+} oder [[Lₙ^{m-}(Me^{p+})]-Sₓ], insbesondere als Feststoff, bevorzugt als Salz, beispielsweise als Alkalisalz (z. B. als Natrium- oder Kaliumsalz) oder als Erdalkalisalz, z. B. mit Calcium oder Magnesium, oder aber mit anderen üblichen Gegenionen.

Es wird angenommen, daß die Bildung der komplexierten Metallsalze bei Zugabe eines Komplexbildners zu einem Metallsalz über die folgenden, idealisiert dargestellten Reaktionen ablaufen:
1.

   LₙMe + q H₂O + MₖS → {[LₙMe]-SHq}^{(k-q)-} + k M⁺ + q OH⁻
2.

   {[LₙMe]-SH_{q}}^{(k-q)-} + q OH⁻ → {[LₙMe]-S}^{k}- + q H₂O

Bei Verwendung einer Ethercarbonsäure kann die folgende idealisierte Reaktion ablaufen:

LₙMe + R-O(CH₂C₂O)ₙ-CH₂-COOH + H₂O → R-O-(CH₂CH₂O)ₙ-CH₂-COO-[LₙMe]⁻ + H₃O⁺

Gemäß einem weiteren Aspekt der Erfindung wird ein Verfahren zur Herstellung des komplexierten Metallsalzes auf dem Trägermaterial beansprucht sowie ein auf einem Trägermaterial aufgebrachtes komplexiertes Metallsalz, wie erhältlich nach diesem Verfahren, wobei ein Metallsalz mit Liganden mit mindestens einen Komplexbildner in Gegenwart von Wasser und gegebenenfalls in Gegenwart einer Base umgesetzt wird,
- wobei das Metall im Metallsalz als Kation vorliegt und Zink ist,
- wobei die Liganden abgeleitet aus Verbindungen mit einem hydrophoben Kohlenstoffgerüst mit hydrophilen Gruppen sind, wobei sie in der Regel als Anion im Metallsalz vorliegen, insbesondere wobei die Liganden aus mindestens einer funktionalisierten Fettsäure, Alkenylcarbonsäure oder Arylcarbonsäure, Alkylsulfonat, Arylsulfonat, Alkylsulfat, Arylsulfat, Alkylphosphat, Arylphosphat, Alkylphosphonat oder Arylphosphonat abgeleitet sind oder aus entsprechend funktionalisierten Alkenyl-, Arylalkenyl- und/oder Arylalkylsäuren, insbesondere wobei die Alkyl- und/oder Aryl-Gruppen mehrfach funktionalisiert sind, wobei die Alkyl-Gruppen linear, verzweigt und/oder cyclisch mit 1 bis 40 C-Atomen, bevorzugt 8 bis 35 C-Atomen, insbesondere 12 bis 25 C-Atomen, und die Aryl-Gruppe 6 oder 12 C-Atome aufweisen, wobei die Alkyl-, Alkenyl- und/oder Aryl-Gruppen mit mindestens einer der folgenden Gruppen funktionalisiert sind: OH, SO₃-, SO₃H, SO₄⁻, SO₄H, COO-, COOH, PO₃⁻ ,PO₃H, PO₄⁻, PO₄H, -O-(Alkyl-O-)ₐAlkyl-OH mit 1 ≤ a ≤ 200, bevorzugt ist 1 ≤ a ≤ 100, und mit Alkyl = Methyl-, Ethyl- oder Propylgruppe, wie -O-(CH₂CH₂-O-)ₐ-CH₂-CH₂-OH oder -O-(CH2-O-)ₐ-CH₂-OH; SH, S⁻, SR, NO₂, NO₃⁻, NH₂, NHR², NR²₂, NH₃⁺, NH₂ R⁽²⁾⁺, NHR²₂⁺ mit R = Kohlenwasserstoffrest, Glykol, Glycerin, Polyglykol, Polyglycerin, F, Cl, I und/oder Br;
- wobei der mindestens eine Komplexbildner ausgewählt ist aus der Gruppe der wasserlöslichen Säuren, Anionen und/oder Salze mindestens einer bifunktionellen bis polyfunktionellen Säure oder Ethercarbonsäure, insbesondere entspricht der Komplexbildner einer Bi-, Tri-, Polycarbonsäure, Bi-, Tri-, Polyphosphonsäure, Bi-, Tri-, Polysulfonsäure, einem Bi-, Tri-, Polysulfat, Di-, Tri-, Polyphosphat, einer Polyethercarbonsäure und/oder einer gemischtfunktionellen Verbindung der Säuren, Anionen und/oder Salze,
und anschließend das komplexierte Metallsalz auf dem Trägermaterial gewonnen bzw. abgeschieden wird.

Beispiele für wasserlösliche Ethercarbonsäuren sind Alkyl-(O-Alkyl)_{c}-COOH oder Alkyl-(O-Alkyl)_{c}-Alkyl-COOH mit c gleich 1 bis 200, insbesondere zwischen 1 bis 100, bevorzugt mit 1 bis 15 C-Atomen. Werden wasserlösliche Salze der Säuren eingesetzt, so liegen diese in der Regel mit üblichen Gegenionen, wie Na⁺, + Li⁺, NH₄⁺, + K⁺, Mg²⁺, Ca²⁺, NH₂R⁺, NHR₂⁺ sowie in Form weiterer üblicher Kationen vor.

Als Komplexbildner eignen sich insbesondere die folgenden Säuren oder Anionen und/oder Salze der Säuren, wie Oxalsäure, Oxalate, wie Dinatriumoxalat, Weinsäure (meso, d und/oder l) bzw. deren Salze, Asparaginsäure, Ethercarbonsäuren, wie beispielsweise CH₃-(CH₂)₇-(O-CH2-CH₂)₈-COOH oder CH₃-(CH₂)₇-(O-CH₂-CH₂)₅-COOH, Ethylendinitrilotetraessigsäure-Salz, wie das Ethylendinitrilotetraessigsäure-Tetranatriumsalz oder 1-Hydroxyethyn-(1,1-diphosphonsäure)-dinatriumsalz.

Als Basen kommen alle üblichen Basen in Betracht, wie insbesondere Alkalihydroxid, Erdalkalihydroxid und/oder eine organische Base. Beispiele für übliche Basen sind NaOH, NH₄OH, Mg(OH)₂. Dem Fachmann sind zusätzliche übliche Basen geläufig.

Der pH-Wert wird üblicherweise auf einen Wert oberhalb von 7 bis hin zu 12, insbesondere auf einen Wert zwischen 7,1 bis 11, bevorzugt auf einen Wert zwischen 7,5 und 8, eingestellt. Der Komplexbildner, insbesondere der Komplexbildner S, wird vorzugsweise äquimolar zum Metallsalz im Verhältnis von 1:1 eingesetzt, zweckmäßig kann auch ein Verhältnis von 2, 3 oder 4 Mol zu einem Mol Metallsalz sein.

Gegenstand der Erfindung ist gleichfalls ein Verfahren zur Herstellung einer geträgerten Struktur, insbesondere eines komplexierten Metallsalzes auf einem Trägermaterial, wie zuvor beschrieben, wobei
ein Metallsalz der allgemeinen Formel III

[[Lₙ ^{m-}(Me^{p+})] (III)

- mit Me = Zink und mit p = 1 oder 2, wobei p der Oxidationszahl von Me entspricht;
- mit L als Ligand, wobei L gleich oder unterschiedlich ist, mit 1 s n s 20, wobei der Ligand L abgeleitet aus einem Molekül der allgemeinen Formel II

   B(R¹-D)₁ (II)

   ist
   - mit einer funktionellen Gruppe D = -COOH und/oder daraus abgeleitetes Anion oder Salz, wobei m in der Formel III der Ladungszahl der funktionellen Gruppe D als Anion oder im Salz entspricht mit m = 1, 2, 3 oder 4 und 1= 1 oder 2,
   - wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B, insbesondere an einem primären, sekundären und/oder tertiären C-Atom, aufweist,
   - mit B = OH, SO₃⁻, SO₃H, SO₄-, -O-SO₃H, -COOH, -PO₃⁻, PO₃H, PO₄⁻, PO₄H, -O-(Alkyl-O-)ₐ-Alkyl-OH mit 1 ≤ a ≤ 200 und mit Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht,
mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen der Säuren und/oder Salze, in Gegenwart von Wasser gegebenenfalls in Gegenwart einer Base umgesetzt wird und anschließend das komplexierte Metallsalz der allgemeinen Formel I auf einem Trägermaterial gewonnen wird.

Gegenstand der Erfindung ist auch ein Verfahren zur Herstellung eines komplexierten Metallsalzes auf einem Trägermaterial, insbesondere der allgemeinen Formel I, als auch ein komplexiertes Metallsalz auf einem Trägermaterial, erhältlich nach diesem Verfahren, indem ein Metallsalz II mit mindestens einem Liganden und mindestens einem Komplexbildner in Gegenwart von Wasser und gegebenenfalls in Gegenwart einer Base umgesetzt wird und anschließend das komplexierte Metallsalz auf einem Trägermaterial gewonnen wird;
wobei als Metallsalz II gegebenenfalls als Hydrat oder Solvat, insbesondere ein anorganisches Metallsalz II,
- mit einem Metallkation, das insbesondere ausgewählt ist aus Zink, Kupfer, Eisen, Cadmium, Quecksilber, Molybdän, Blei, Cobalt, Nickel, Chrom, Vanadium, Mangan oder Wolfram; und
- mit mindestens einem Gegenion, insbesondere einem anorganischen Gegenion, bevorzugt ein Sulfat, Carbonat, Halogenid, Hydroxid und/oder mit mindestens zwei der genannten Gegenionen im Metallsalz II,
und mit mindestens einem Liganden, insbesondere L, gemäß der vorstehenden Definition, wobei der Ligand selbst eingesetzt wird, insbesondere der allgemeinen Formel II, und mit mindestens einem Komplexbildner, insbesondere S oder HₖS, gemäß der vorstehenden Definition für Komplexbildner, in Gegenwart von Wasser und gegebenenfalls in Gegenwart einer Base umgesetzt wird und anschließend das komplexierte Metallsalz auf einem Trägermaterial gewonnen wird.

Durch Entfernen des Wassers kann das komplexierte Metallsalz auf einem Trägermaterial gewonnen werden, wobei vorzugsweise das Metallsalz eine Restfeuchte aufweist.

Als Basen kommen alle üblichen Basen in Betracht, wie insbesondere ein Alkalihydroxid, Erdalkalihydroxid und/oder eine organische Base; Beispiele für übliche Basen sind NaOH, NH₄OH und Mg(OH)₂. Dem Fachmann sind zusätzliche übliche Basen geläufig. Der pH-Wert wird üblicherweise auf einen Wert oberhalb von 7 bis hin zu 12, insbesondere auf einen Wert zwischen 7,1 bis 11, bevorzugt auf einen Wert zwischen 7,5 und 8 eingestellt. Der Komplexbildner, insbesondere der Komplexbildner S, wird vorzugsweise äquimolar zum Metallsalz im Verhältnis von 1:1 eingesetzt; zweckmäßig kann auch ein Verhältnis von 2, 3 oder 4 Mol zu einem Mol Metallsalz sein.

Das Kation A im gebildeten komplexierten Metallsalz kann gleich oder verschieden sein und einem Wasserstoffproton, einem organischen Kation und/oder einem Metallkation, gemäß vorstehender Ausführungen, wie beispielsweise einem Erdalkali- oder Alkalimetallkation, insbesondere einem Kation aus der zugesetzten Base, entsprechen.

Die Umsetzung des Metallsalzes, insbesondere der Formel III, erfolgt in Gegenwart von Wasser bei einer Temperatur zwischen 0 °C und 100 °C; bevorzugt erfolgt die Umsetzung bei einer Temperatur zwischen 20 °C bis 80 °C, besonders bevorzugt bei einer Temperatur zwischen 40 °C und 80 °C, insbesondere unter Rühren, Schütteln oder anderen Maßnahmen, die eine Vermischung des Metallsalzes, des Komplexbildners und Wasser bewirken.

Erfindungsgemäß wird das in Wasser gelöste komplexierte Metallsalz, insbesondere das komplexierte Metallsalz der allgemeinen Formel I, auf dem Trägermaterial gewonnen, indem das Wasser entfernt oder es aus dem Wasser isoliert wird, insbesondere wird es durch Auskristallisieren, Eindampfen, Ausfällen, Sprühtrocknen oder einer anderen Methode als Feststoff auf einem Trägermaterial isoliert. Beispielsweise kann es auch durch Zugabe eines Antilösemittels bzw. Fällungsmittels auf einem Trägermaterial abgeschieden werden. Die üblichste Methode ist das Verdampfen des Lösungsmittels Wasser bei erhöhten Temperaturen, beispielsweise bei 50 °C bis 150 °C, bevorzugt bei 50 °C bis 100 °C, besonders bevorzugt bei 70 °C bis 85 °C, gegebenenfalls bei vermindertem Druck.

Als Trägermaterial kommen generell alle Materialien in Betracht, dies können neben Feststoffen aus einem organischen oder anorganischen Material auch Kompositmaterialien sein. Aber auch textile Materialien, wie Fasern, gewebte Matten oder dergleichen können mit den komplexen Metallsalzen modifiziert und/oder behandelt werden. Bevorzugte Trägermaterialien sind Silikat, Siliziumdioxid, Metalloxide, wie Titandioxid, Ton, Glas, organische Polymere, Aktivkohle, Zeolith oder Harz. Weitere Substrate, die als Trägermaterial dienen können sind Pappen oder Kunststoffe sowie weitere generell denkbare Trägermaterialien, auf denen die komplexierten Metallsalze aufgebracht werden können. Bevorzugt kommen auch mikro- und/oder nanostrukturierte Oberflächen als Trägermaterialien in Betracht, wie beispielsweise anodisch oxidierte Aluminiumfolie.

Gegenstand der Erfindung ist auch eine Zusammensetzung, enthaltend ein geträgertes komplexiertes Metallsalz, insbesondere ein geträgertes komplexiertes Metallsalz gemäß der allgemeinen Formel I, sowie gegebenenfalls weitere übliche Hilfsstoffe und/oder weitere Wirkstoffe.

Eine bevorzugte Zusammensetzung besteht aus dem komplexierten Metallsalz auf einem Trägermaterial, insbesondere einem komplexierten Metallsalz nach Formel I. Die erfindungsgemäße Zusammensetzung, enthaltend ein komplexiertes Metallsalz auf einem Trägermaterial, insbesondere ein komplexiertes Metallsalz nach Formel I, kann gegebenenfalls weitere Hilfsstoffe und/oder Wirkstoffe, wie Haftmittel, Kleber, Verdickungsmittel oder auch Lösemittel, in denen das komplexierte Metallsalz unlöslich ist, sowie weitere übliche Zusatzstoffe enthalten, um beispielsweise die Zusammensetzung bei Bedarf in ein kosmetisches Produkt, eine Formulierung als Reinigungsmittel oder in eine Formulierung zur Raumluft Desodorierung etc. zu überführen.

Der Gehalt an komplexiertem Metallsalz auf dem Trägermaterial in der Zusammensetzung kann zwischen 0,1 Gew.-% und 99 Gew.-%, insbesondere zwischen 0,1 und 75 Gew.-%, bevorzugt zwischen 0,1 und 50 Gew.-%, besonders bevorzugt zwischen 0,1 und 15 Gew.-%, betragen, bezogen auf die geträgerte Gesamtstruktur aus komplexiertem Metallsalz und Trägermaterial.

Ein weiterer erfindungsgemäßer Gegenstand ist einerseits die Verwendung des komplexierten Metallsalzes auf dem Trägermaterial, insbesondere der allgemeinen Formel I, oder einer Zusammensetzung, enthaltend das komplexierte Metallsalz, auf dem Trägematerial zur chemischen Bindung bzw. Adsorption von Schadstoffen und/oder geruchsbildenden Substanzen, insbesondere von Schadstoffen und/oder Substanzen mit Elektronendonoreigenschaften. Typische Anwendungsfelder sind desodorierend oder neutralisierend wirkende, hygienische und/oder kosmetische Produkte, Haushaltsreiniger, Industriereiniger, Adsorber in Filtern, Formulierungen für die Anwendung in der privaten und/oder gewerblichen Tierhaltung, Produkte für die Behandlung und/oder Modifizierung von textilen Fasern, Geweben oder in Waschmittelzusammensetzungen als auch in pharmazeutischen Produkten sowie weitere Formulierungen oder Zusammensetzungen.

Alternativ kann das komplexierte Metallsalz auf einem Trägermaterial oder eine Zusammensetzung, enthaltend das komplexierte Metallsalz auf einem Trägermaterial, insbesondere der allgemeinen Formel I, auch zur Behandlung und/oder Modifizierung von Verbindungen oder anderen Zusammensetzungen verwendet werden. Die Behandlung und/oder Modifizierung von Verbindungen, insbesondere von verunreinigten Verbindungen, insbesondere chemischen Verbindungen, oder verunreinigten Zusammensetzungen, beispielsweise verunreinigten Zusammensetzungen, die Lösemittel und/oder Schadstoffe und/oder Substanzen enthalten, die aus der Zusammensetzung entfernt werden sollen, erfolgt dann beispielsweise durch Inkontaktbringen des komplexierten Metallsalzes auf dem Trägermaterial oder einer Zusammensetzung, enthaltend ein geträgertes komplexiertes Metallsalz.

Im Rahmen der vorliegenden Erfindung wurde somit überraschenderweise gefunden, daß sich Metallseifen zu Komplexen umsetzen lassen, die wasserlöslich sind und ihre desodorierenden Eigenschaften behalten und auf geeigneten Trägermaterialien abgeschieden werden können. Dazu ist im Gegensatz zum Stand der Technik folgendes erforderlich: Zn-Seife, Komplexierungsmittel, Wasser und gegebenenfalls eine Base (z. B. NaOH) zur Stabilisierung des pH-Wertes und die diesbezügliche Umsetzung zu den erfindungsgemäßen komplexierten Metallsalzen mit nachfolgender Abscheidung auf geeigneten Trägermaterialien.

Wie zuvor beschrieben, sind die Komplexierungsmittel bevorzugt Anionen der Bi- Tri- und Polycarbonsäuren, Anionen der Bi-, Tri- und Polyphosphonsäuren, Anionen der Bi-, Tri- und Polysulfonsäuren, Anionen aller gemischten Formen der obengenannten Säuren, Anionen der wasserlöslichen Ethercarbonsäuren R-O(-C-C-O)n-C-COO⁻, Di-, Tri-, Polysulfate, Di-, Tri- Polyphosphate und Mischformen.

Es wurde überraschend gefunden, daß eine Säurefunktion, vorzugsweise genau eine Säurefunktion, des Komplexierungsmittels (z. B. Carboxylat, Phosphonat, Sulfonat, Sulfat, Phosphat etc.) direkt mit dem Metallatom eine koordinative und/oder ionische Bindung eingeht. Weiterhin wurde überraschenderweise festgestellt, daß der entstehende Komplex im allgemeinen nur dann wasserlöslich wird, wenn der pH-Wert mit einer Lauge so eingestellt wird, daß eine vollständige Deprotonierung der verbleibenden Säurefunktionen, die nicht mit dem Metall komplexieren, eintritt. Der Komplex wird dann negativ geladen und somit wasserlöslich.

Die Herstellung dieser Komplexe erfolgt im allgemeinen, wie zuvor beschrieben, durch Reaktion der Komplexierungsmittel mit der Metallseife in der Wärme im Lösungsmittel Wasser. Die Zugabe von OH⁻-Ionen führt in der Wärme unter Rühren oder Schütteln zur raschen Auflösung des gebildeten Komplexes in Wasser. Nach Abkühlen bleibt dieser Komplex in Lösung. Es entsteht ein klare Flüssigkeit, die auch in der Kälte stabil bleibt und nachfolgend auf einen geeigneten Träger appliziert werden kann.

Die Anmelderin konnte zeigen, daß die entstehenden neuen Komplexe grenzflächenaktiv sind. Die Komplexe reduzieren die Oberflächenspannung wäßriger Lösungen und zeigen z. B. eine ausgeprägte Schaumbildung. Diese neuen Komplexe sind aufgrund der Grenzflächenaktivität nun in der Lage, an der Wasser/Luft- oder Wasser/Öl-Grenzfläche zu adsorbieren. Überraschenderweise sind diese Komplexe dann und nur dann in der Lage, schwefel- und stickstoffhaltige gasförmige Verbindungen sowie Carbonsäuren aus der Gasphase/Atmosphäre effektiv chemisch zu binden.

Weiterhin können die neuen Komplexverbindungen ohne weiteres auf beliebigen festen Trägermaterialien aufgebracht werden. Durch Verdampfen des Lösungsmittels Wasser entstehen auf den Festkörpermaterialien die Salze der neuen Komplexverbindungen. Die Säurefunktionen des Komplexierungsmittels sind im Trockenen durch ein Kation (z. B. Na⁺) abgesättigt. In getrocknetem Zustand sind diese Festkörpermaterialien (= Festkörper + Komplex) dann geeignet, die obengenannten Schadstoffe aus der Gasphase/Atmosphäre sowie aus organischen Lösungsmitteln zu adsorbieren. Der Gehalt an Restfeuchte bzw. Wasser ist erforderlich, um die Adsorption von Schadstoffen zu ermöglichen. In der Regel sind die absolut wasserfreien Komplexe nicht in der Lage Schadstoffe zu absorbieren. Der Gehalt an Restfeuchte bzw. Wasser in Bezug auf das Gesamtsystem Komplex und Restfeuchte sollte zwischen 0,5 und 5 Gew.-% betragen, insbesondere zwischen 0,5 und 2,5 Gew.-%, besonders bevorzugt 0,5 bis 1 Gew.-%. Absolut trockene, d.h. wasserfreie Komplexe, können durch Befeuchten, in Gegenwart von Luftfeuchtigkeit oder durch Auflösen in Wasser erneut aktiviert werden.

Die neuen Komplexverbindungen können auch als feste Salze durch Verdampfen des Lösungsmittels Wasser gewonnen werden. Die Salze adsorbieren die obengenannten Schadstoffe aus der Gasphase und aus organischen Lösungsmitteln. Die Salze adsorbieren die oben genannten Schadstoffe aus der Gasphase und aus organischen Lösemitteln, insbesondere wenn die Salze den genannten Gehalt an Restfeuchte aufweisen.

Eine formale Darstellung der Struktur der grenzflächenaktiven Komplexe und ihre Wirkungsweise am Beispiel des Metallsalzes L₁-Me-L₂ findet sich in der Figur 1.

Bevorzugterweise sollte dabei der Ligand L bzw. das schadstoffabsorbierende Metallsalz folgende Eigenschaften haben:
Das nichtkomplexierte Metallsalz sollte wasserunlöslich sein. Die Liganden L im Metallsalz sind demzufolge hydrophob und als reine Substanzen ebenfalls unlöslich in Wasser. Die Liganden müssen jedoch eine hydrophile Gruppe als Substituenten aufweisen. Hydrophile Gruppen sind z. B. -OH, -SO₃⁻, SO₃H, - SO₄⁻, SO₄H, -COO⁻, -COOH, -PO₃⁻ PO₃H, PO₄⁻, PO₄H, -O-(C-C-O-)ₙ-C-C-OH (n=1, 2, ....N), -SH, -S⁻, -SR, NO₂, NO₃⁻, -NH₂, -NHR, -NR₂, -NH₃⁺, - NH₂R⁺, -NHR₂⁺, Glykole, Glycerin, Polyglykole, Polyglycerine, F, Cl, I, Br etc.

Es wurde gefunden, daß diese Konformation der Substituenten deshalb nötig ist, da durch die Herstellung des neuen Komplexes das Metallsalz wasserlöslich und grenzflächenaktiv wird. An der Wasser/Luft- oder Wasser/Öl-Grenzfläche werden die Liganden parallel zur Grenzfläche orientiert. Dadurch wird das Metallatom sterisch für die koordinative und/oder ionische Bindung mit den Schadstoffmolekülen zugänglich.

Die grenzflächenaktiven neuen Komplexe sind in der Lage, geruchsbildende Substanzen und Schadstoffe der zuvor beschrieben Art chemisch zu binden.

Mögliche Anwendungen sind die Herstellung von desodorierend oder Schadstoffe neutralisierenden bzw. adsorbierenden hygienischen und/oder kosmetischen Formulierungen, Haushaltsreinigern, Industriereinigem, Adsorbern in Filtern, Formulierungen für die Anwendung in der privaten und gewerblichen Tierhaltung, Formulierungen für die Behandlung von textilen Fasern und Geweben, Waschmittelzusammensetzungen und dergleichen.

Gemäß einer Ausführungsform können die eingesetzten Komplexe durch die folgende Formel wiedergegeben werden

[LₙMe)]-S^{k-}

wobei folgendes gilt:
- Me sind Metalle, wie z. B. Zink, Kupfer, Eisen, Cadmium, Quecksilber, Molybdän, Blei, Cobalt, Nickel, Chrom, Vanadium, Mangan und Wolfram;
- Lₙ sind Liganden, wobei es gilt: L₁ = L₂ = ... = Lₙ₋₁ = Lₙ (gleichartige Liganden) oder wobei die Liganden auch unterschiedlich sein können, wie z. B. L₁ ≠ L₂ =...= Lₙ₋₁ = Lₙ;
- Liganden können sein:
   Funktionalisierte Fettsäuren: Fettsäuren, deren hydrophobe Alkylketten durch eine oder mehrere Gruppen der folgenden Art in der Seitenkette tragen: -OH, -SO₃⁻, SO₃H, -SO₄⁻, SO₄H, -COO⁻, -COOH, -PO₃⁻, PO₃H, PO₄⁻, PO₄H, -O-(C-C-O-)ₙ-C-C-OH (n=1, 2, ....N), -SH, -S⁻, -SR, NO₂, NO₃⁻, - NH₂, -NHR, -NR₂, -NH₃⁺, -NH₂R⁺, -NHR₂⁺, F, Cl, I, Br;
   Funktionalisierte Alkylsulate, Alkylsulfonate, deren hydrophobe Alkylketten durch eine oder mehrere Gruppen der folgenden Art in der Seitenkette tragen: -OH, -SO₃⁻, SO₃H, -SO₄⁻, SO₄H, -COO⁻, -COOH, -PO₃⁻ PO₃H, PO₄⁻, PO₄H, -O-(C-C-O-)ₙ-C-C-OH (n=1, 2, ....N), -SH, -S⁻, -SR, NO₂, NO₃⁻, - NH₂, -NHR, -NR₂, -NH₃⁺, -NH₂R⁺, -NHR₂⁺, F, Cl, I, Br;
   Funktionalisierte Alkylphosphate, Alkylphosphonate, deren hydrophobe Alkylketten durch eine oder mehrere Gruppen der folgenden Art in der Seitenkette tragen: -OH, -SO₃⁻, SO₃H, -SO₄⁻, SO₄H, -COO⁻, -COOH, -PO₃⁻ PO₃H, PO₄⁻, PO₄H, -O-(C-C-O-)ₙ-C-C-OH (n=1, 2, ....N), -SH, -S⁻, -SR, NO₂, NO₃⁻, -NH₂, -NHR, -NR₂, -NH₃⁺, -NH₂R⁺, -NHR₂⁺, F, Cl, I, Br
   Funktionalisierte aromatische Carbonsäuren, Sulfate, Sulfonate, Phosphate, Phosphonate, die eine oder mehrere Gruppen der folgenden Art in der Seitenkette tragen: -OH, -SO₃⁻, SO₃H, -SO₄⁻, SO₄H, -COO⁻, -COOH, -PO₃⁻ PO₃H, PO₄⁻, PO₄H, -O-(C-C-O-)ₙ-C-C-OH (n=1, 2, ....N), -SH, -S⁻, -SR, NO₂, NO₃⁻, -NH₂, -NHR, -NR₂, -NH₃⁺, -NH₂R⁺, -NHR₂⁺, F, Cl, I, Br
- S ist der Solubilisator oder Komplexierungsmittel:
- Als Komplexierungsmittel S werden die wasserlöslichen Säuren oder Salze der
   Bi-, Tri- und Polycarbonsäuren
   Bi-, Tri- und Polyphosphonsäuren
   Bi-, Tri- und Polysulfonsäuren
   gemischte Formen der obengenannten Salze
   wasserlösliche Ethercarbonsäuren R-(-O-C-C)ₙ-COOH bzw. R-(-O-C-C)"-C-COO⁻ und deren Derivate
   Di-, Tri- Polysulfate, Di-, Tri- Polyphosphate und Mischformen verwendet.
- Der resultierende grenzflächenaktive Komplex ist k-fach negativ geladen; im Falle der Ethercarbonsäuren hat er die Ladung 0.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird nachfolgend anhand von Ausführungsbeispielen veranschaulicht, welche die vorliegende Erfindung jedoch keinesfalls beschränken.

### Ausführungsbeispiele:

### Allgemeines Beispiel I:

Die in Wasser unlöslichen Metallsalze, insbesondere der obigen allgemeinen Formel III [[Lₙ^{m-}(Me^{p+})], werden in der Wärme bei 40 °C bis 80 °C unter Zusatz des entsprechenden Komplexierungsmittels, wie des Komplexierungsmittels S, insbesondere der Säure HₖS oder des Salzes des Komplexierungsmittels AₖS und unter Zugabe einer Base, wie Natronlauge (NaOHaq), gelöst. Nachfolgend wird die Lösung auf einem geeigneten Trägermaterial abgeschieden und das Lösemittel verdampft, so daß geträgerte Metallkomplexe von komplexierten Metallsalzen auf einem Träger resultieren.

### Allgemeines Beispiel II:

Die in Wasser unlösliche Metallverbindung LₙMe wird in der Wärme bei 40 bis 80 °C unter Zusatz des entsprechenden Komplexierungsmittels HₖS oder des Salzes des Komplexierungsmittels und unter Zugabe einer Base (z. B. NaOH gelöst. Nachfolgend wird die Lösung auf einem geeigneten Trägermaterial abgeschieden und das Lösemittel verdampft, so daß geträgerte Metallkomplexe von komplexierten Metallsalzen auf einem Träger resultieren.

### Allgemeines Beispiel III:

Die in Wasser unlöslichen Metallsalze, insbesondere der allgemeinen Formel III [[Lₙ^{m-}(Me^{p+})], werden in der Wärme bei 40 °C bis 80 °C unter Zusatz des entsprechenden Komplexierungsmittels, wie des Komplexierungsmittels S, insbesondere der Säure HₖS oder des Salzes des Komplexierungsmittels AₖS und unter Zugabe einer Base, wie Natronlauge (NaOHaq), gelöst. Alternativ können direkt die wasserlöslichen Salze der Komplexbildner in Gegenwart von Wasser mit dem Metallsalz umgesetzt werden und durch Abdampfen des Wassers auf dem Trägermaterial abgeschieden werden. Dazu kann die wäßrige Mischung mit dem komplexierten Metallsalz und mit dem Trägermaterial beispielsweise bei erhöhten Temperaturen getrocknet werden, insbesondere bei 50 °C bis 100 °C, bevorzugt bei 70 °C bis 90 °C, gegebenenfalls unter reduziertem Druck.

### Allgemeines Beispiel IV:

Gemäß einer Alternative können die komplexierten Metallsalze auch aus ihren Rohstoffen erhalten werden. Dazu wird mindestens ein Ligand, insbesondere eine funktionalisierte Fettsäure, ein Metallsalz II, bevorzugt ein anorganisches Metallsalz, wie Me^{p+} mit mindestens einem Gegenion, beispielsweise ein Metallsulfat, Metallcarbonat, Metallhalogenid, Metallhydroxid oder ein anderes übliches Salz, mit einem Komplexierungsmittel und Wasser, gegebenenfalls unter Zusatz einer Base, beispielsweise Natriumhydroxid, direkt umgesetzt, um das komplexierte Metallsalz zu erhalten. Nachfolgend wird die Lösung auf einem geeigneten Trägermaterial abgeschieden und das Lösemittel verdampft, so daß geträgerte Metallkomplexe von komplexierten Metallsalzen auf einem Träger resultieren.

### Beispiel 1:

Als Metallsalz wird die Zinkseife Zinkrizinoleat [Zn(C₁₈H₃₃O₃)₂] mit dem Komplexierungsmittel Oxalsäure umgesetzt. Dazu werden ein Gramm Zinkrizinoleat zusammen mit 1,13 g Oxalsäure in einem 100 ml Becherglas eingewogen und 25 ml destilliertes Wasser zugegeben. Unter Rühren wird die Suspension auf 75 °C erhitzt. Nachdem das Zinkrizinoleat geschmolzen ist, wird tropfenweise 5 M Natronlauge zugegeben, bis das geschmolzene Zinkrizinoleat bei einem pH-Wert von 7 bis 8 klar in Lösung geht. Es ist eine Schaumbildung zu erkennen. Anschließend wird die klare Lösung auf Raumtemperatur abgekühlt.

Die folgende Reaktionsgleichung stellt die bei der Umsetzung ablaufende Reaktion dar:

Zn(C₁₈H₃₃O₃)₂ + HOOC-COOH + 20H⁻ → {[Zn(C₁₈H₃₃O₃)₂]-OOC-COO⁻}²⁻+ H₂O

Anschließend wird in an sich bekannter Weise der gebildete Komplex auf Titandioxid abgeschieden.

Alternativ können auch direkt die entsprechenden wasserlöslichen Salze der Komplexierungsmittel mit Zinkrizinoleat [Zn(C₁₈H₃₃O₃)₂] umgesetzt werden. Komplexierte Metallsalze wurden auch mit den Komplexierungsmitteln Ethylendinitriloessigsäure-Tetranatriumsalz, 1-Hydroxyethan-(1,1-diphosponsäure)-Dinatriumsalz, Oxalsäuredinatriumsalz, Weinsäuredinatriumsalz (meso, d und/oder l) in Wasser hergestellt und auf Trägermaterialien abgeschieden.

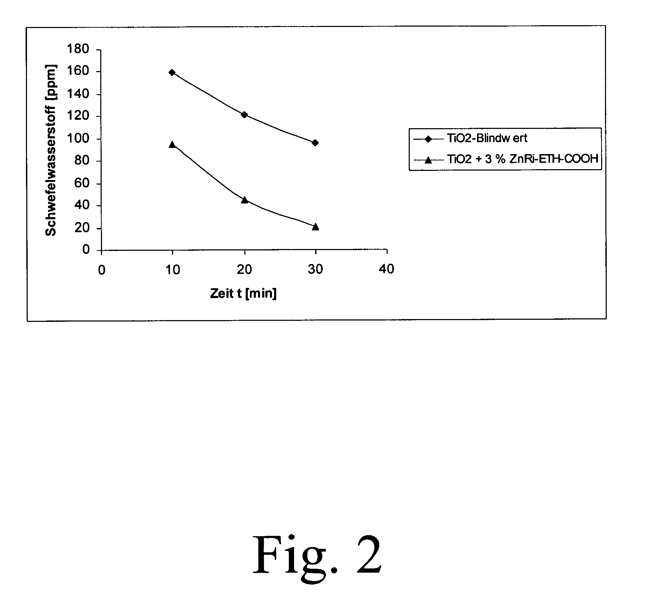

Die Messung der Schadstoffadsorption wird anhand des folgenden in der Figur 2 dargestellten Ausführungsbeispiels näher erläutert: Figur 2 stellt die Adsorption von H₂S (1 ml, 1:100 verdünnte, gesättigte Natriumsulfitlösung, 100 µl 99 % HAC, Essigsäure) am Wirkstoffkomplex CH₃-(CH₂)₇-(OCH₂CH₂)₈-COO-[Zn(C₁₈H₃₃O₃)₂] auf Titandioxid als Trägermaterial gegenüber einer Blindprobe mit reinem Titandioxid, dar (Getrocknet wurde das geträgerte komplexierte Metallsalz bei 80 °C, mit Ri = (C₁₈H₃₃O₃)₂), wobei in der Figur 2 ETH-COOH = CH₃-(CH₂)₇-(OCH₂CH₂)₈-COOH entspricht.

### Beispiel 2:

Als Metallsalz wird die Zinkseife Zinkrizinoleat [Zn(C₁₈H₃₃O₃)₂] mit dem Komplexierungsmittel 1-Hydroxyethyn-(1,1-diphosphonsäure) (HEDP) umgesetzt. Dazu werden ein Gramm Zinkrizinoleat zusammen mit 0,560 g 60%iger 1-Hydroxyethyn-(1,1-diphosphonsäure) in einem 100-ml-Becherglas eingewogen und 25 ml destilliertes Wasser zugegebenen. Unter Rühren wird die Suspension auf 75 °C erhitzt. Nachdem das Zinkrizinoleat geschmolzen ist, wird tropfenweise 5 M Natronlauge zugegeben, bis das geschmolzene Zinkrizinoleat klar in Lösung geht. Es ist eine Schaumbildung zu erkennen. Entsprechend dem Beispiel 1 oder 2 wurde auch Zinkrizinoleat [Zn(C₁₈H₃₃O₃)₂] mit dem Komplexierungsmittel Asparaginsäure umgesetzt.

Alternativ können auch direkt die entsprechenden wasserlöslichen Salze der Komplexierungsmittel mit Zinkrizinoleat [Zn(C₁₈H₃₃O₃)₂] umgesetzt werden. Komplexierte Metallsalze wurden auch mit den Komplexierungsmitteln Ethylendinitriloessigsäure-Tetranatriumsalz, 1-Hydroxyethan-(1,1-diphosponsäure)-dinatriumsalz, Oxalsäuredinatriumsalz, Weinsäuredinatriumsalz (meso, d und/oder l) in Wasser hergestellt.

Anschließend wird in an sich bekannter Weise der gebildete Komplex auf verschiedenen Trägermaterialien (z. B. Titandioxid, Aktivkohle, Zeolithe etc.) abgeschieden, wobei auch partikuläre Trägermaterialien zum Einsatz kommen können (z. B. in Form von Kügelchen, Pellets etc.).

### Beispiel 3:

In einem 100 ml Becherglas werden 5 g Zinkrizinoleat (ZnRi) sowie 10 g Ethercarbonsäure (LF2 = CH₃-(CH₂)₇-(OCH₂CH₂)₈-COOH) gemischt und unter Rühren auf ca. 75-80 °C erhitzt. Nach dem Abkühlen im Wasserbad auf Raumtemperatur wird eine hochviskose, leicht trübe Lösung erhalten. Unter Rühren kann diese Lösung mit destilliertem Wasser verdünnt werden. Mit der Verdünnung wird die leicht trübe Lösung in der Regel wieder klar.

Der entstehende Komplex

{[Zn(C₁₈H₃₃O₃)₂] [CH₃-(CH₂)₇-(OCH₂CH₂)₈-COO]}-

ist in Wasser grenzflächenaktiv und die wäßrige Lösung ist in der Lage NH₃ und H₂S zu absorbieren. Der Komplex kann auf festen Trägern unter Abdampfen des Lösungsmittels Wasser aufgebracht werden. Die modifizierten festen Trägermaterialien sind in der Lage, NH₃ und H₂S zu absorbieren.

### Beispiel 4:

In einem 100 ml Becherglas werden 2,5 g basisches Zinkcarbonat sowie 97,5 g Ethercarbonsäure (LF2 = CH₃-(CH₂)₇-(OCH₂CH₂)₈-COOH) gemischt und unter Rühren auf ca. 100-105 °C erhitzt. Nach dem Abkühlen im Wasserbad auf Raumtemperatur wird eine viskose, trübe Lösung erhalten. Die Lösung kann unter Rühren mit destilliertem Wasser verdünnt werden. Durch die Verdünnung wird die Lösung in der Regel wieder klar. Der Komplex kann auf festen Trägern unter Abdampfen des Lösungsmittels Wasser aufgebracht werden. Die modifizierten festen Trägermaterialien sind in der Lage, NH₃ und H₂S zu absorbieren.

### Beispiel 5:

5 g Rizinolsäure (Ri; 0,005 mol) werden mit 20 ml destilliertem Wasser und 0,0025 mol HEDP (1-Hydroxyethan-(1,1-diphosphonsäure)-Dinatriumsalz) in einem 250 ml Erlenemeyerkolben vorgelegt. Anschließend wird 6M Natronlauge so lange tropfenweise zugegeben bis eine klare Lösung bei einem pH-Wert von etwa 8,1 resultiert. Dann werden 0,725 g (0,0025 mol) Zinksulfat Heptahydrat, gelöst in 10 ml Wasser, mit Hilfe einer Pipette tropfenweise zugeführt. Durch weitere tropfenweise Zugabe der 6M Natronlauge entsteht bei pH 8 eine klare Lösung. Schließlich erfolgt die Zugabe von 20 g des zu belegenden festen Substrates. Anschließend wird die Lösung abgedampft, so daß der feste Aktivstoff, insbesondere das komplexierte Metallsalz, auf dem Trägermaterial verbleibt.

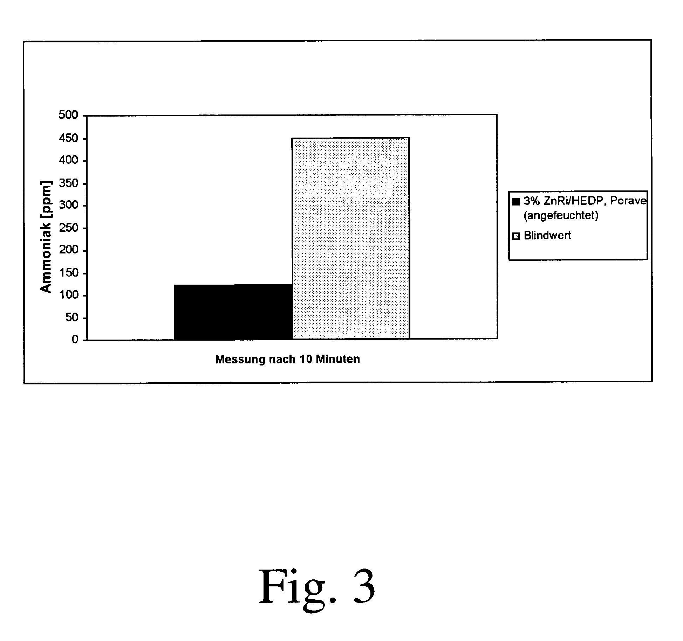

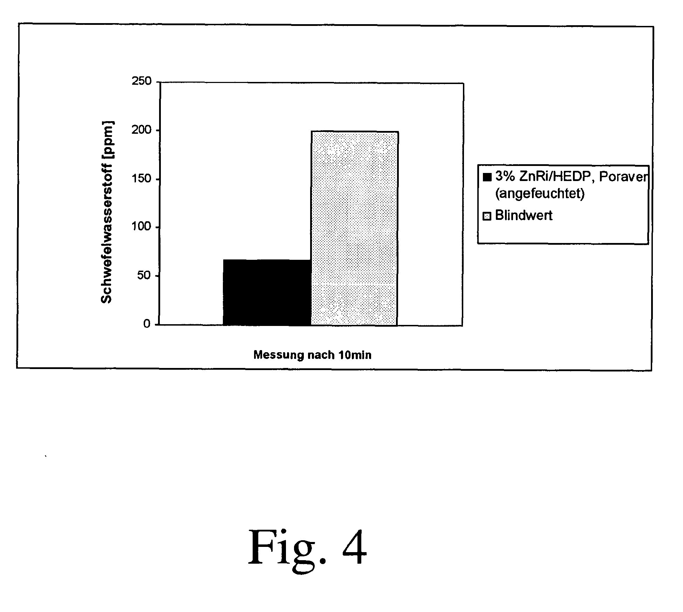

Die Messung der Schadstoffadsorption wird anhand der folgenden in den Figuren 1 bis 4 dargestellten Ausführungsbeispiele näher dargestellt:
- Figur 1:: Stellt eine mögliche idealisierte Struktur der grenzflächenaktiven Komplexe dar.
- Figur 2:: Stellt die Adsorption von H₂S (1 ml, 1:100 verdünnte, gesättigte Natriumsulfitlösung, 100 µl 99 % HAC, Essigsäure) am Wirkstoffkomplex CH₃-(CH₂)₇-(OCH₂CH₂)₈-COO-[Zn(C₁₈CH₃₃O₃)₂] auf Titandioxid als Trägermaterial gegenüber einer Blindprobe mit reinem Titandioxid, dar (Getrocknet wurde das geträgerte komplexierte Metallsalz bei 80 °C, mit Ri = (C₁₈H₃₃O₃)₂), wobei in der Figur 2 ETH-COOH = CH₃-(CH₂)₇-(OCH₂CH₂)₈-COOH entspricht.
- Figur 3:: Stellt die Adsorption von Ammoniak; 10 µl 1:5 verdünnter 25%iger Ammoniak-Lösung auf 1 g Adsorbens (3 % ZnRi/HEDP, Poraver, angefeuchtet) dar.
- Figur 4:: Stellt die Adsorption von Schwefelwasserstoff; 1 ml 1:100 verdünnter ges. Natriumsulfidlösung 100 µl 99% Essigsäure dar (3 % ZnRi/HEDP, Poraver, angefeuchtet).

## Patentansprüche

1. Geträgerte Struktur zur chemischen Bindung und/oder zur Adsorption von Schadstoffen und/oder geruchsbildenden Substanzen mit Elektronendonoreigenschaften, umfassend ein komplexiertes Metallsalz auf einem Trägermaterial,
wobei das komplexierte Metallsalz der allgemeinen Formel I
[[Lₙ^{m-}(Me^{p+})]-Sₓ^{k-}]• zA^{y+} (I)
entspricht
- mit Me als Metall, wobei Me = Zink;
- mit p = 1 oder 2, wobei p der Oxidationszahl von Me entspricht;
- mit L als Ligand, wobei L gleich oder unterschiedlich ist, mit 1 ≤ n ≤ 20, wobei der Ligand L abgeleitet aus einem Molekül der allgemeinen Formel II
B(R¹-D)_{I} (II)
ist
• mit einer funktionellen Gruppe D = -COOH und/oder ein daraus abgeleitetes Anion oder Salz, wobei m in der Formel I der Ladungszahl der funktionellen Gruppe D als Anion oder im Salz mit m = 1, 2, 3 oder 4 entspricht und I = 1 oder 2, und
• wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B aufweist, und
• mit B = OH, SO₃⁻, SO₃H, SO₄⁻, -OSO₃H, -COOH, -PO₃⁻, PO₃H, PO₄⁻, PO₄H, -O-(Alkyl-O-)ₐ-Alkyl-OH mit 1 ≤ a s 200 und Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾ -F, -Cl, -I, - Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht;
- mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen dieser Säuren, Anionen und/oder Salze mit x = 1, 2, 3 oder 4 und wobei k der Ladungszahl des Anions von S entspricht mit 1 ≤ k ≤ 20;
- wobei A gleich oder verschieden ist und einem Wasserstoffproton, einem organischen Kation und/oder einem Metallkation entspricht, insbesondere ein Erdalkali- oder Alkalimetallkation ist, mit z = 1, 2, 3 oder 4 und wobei y der Ladungszahl von A entspricht mit y = 1 oder 2, wobei der Betrag von x • k = z • y ist,
wobei das komplexierte Metallsalz wasserlöslich ist.

2. Geträgerte Struktur, insbesondere komplexiertes Metallsalz auf einem Trägermaterial, nach Anspruch 1, **dadurch gekennzeichnet,**
**dass** das komplexierte Metallsalz grenzflächenaktiv ist und/oder
**dass** das komplexierte Metallsalz als Feststoff vorliegt und/oder
**dass** das Trägermaterial ein organisches oder anorganisches Material oder ein Kompositmaterial oder ein organisch-anorganisches Hybridmaterial ist, insbesondere wobei das Trägermaterial ein Silikat, Siliziumdioxid, Metalloxid, Ton, Glas, organisches Polymer, Aktivkohle, ein Zeolith oder ein Harz ist.

3. Verfahren zur Herstellung einer geträgerten Struktur, insbesondere eines komplexierten Metallsalzes auf einem Trägermaterial nach einem der Ansprüche 1 oder 2,
**dadurch gekennzeichnet,**
**dass** ein Metallsalz der allgemeinen Formel III
[[Lₙ ^{m-}(Me^{p+})] (III)
- mit Me = Zink und mit p = 1 oder 2, wobei p der Oxidationszahl von Me entspricht;
- mit L als Ligand, wobei L gleich oder unterschiedlich ist, mit 1 ≤ n ≤ 20, wobei der Ligand L abgeleitet aus einem Molekül der allgemeinen Formel II
B(R¹-D)_{I} (II)
ist
• mit einer funktionellen Gruppe D = -COOH und/oder daraus abgeleitetes Anion oder Salz, wobei m in der Formel III der Ladungszahl der funktionellen Gruppe D als Anion oder im Salz entspricht mit m = 1, 2, 3 oder 4 und I = 1 oder 2,
• wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B, insbesondere an einem primären, sekundären und/oder tertiären C-Atom, aufweist,
• mit B = OH, SO₃⁻, SO₃H, SO₄⁻, -O-SO₃H, -COOH, -PO₃⁻, PO₃H, PO₄⁻, PO₄H, -O-(Alkyl-O-)ₐ-Alkyl-OH mit 1 ≤ a ≤ 200 und mit Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht,
mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen der Säuren und/oder Salze,
in Gegenwart von Wasser gegebenenfalls in Gegenwart einer Base umgesetzt wird und anschließend das komplexierte Metallsalz der allgemeinen Formel I auf einem Trägermaterial gewonnen wird.

4. Verfahren nach Anspruch 3, **dadurch gekennzeichnet,**
**dass** die Umsetzung des Metallsalzes mit dem Komplexbildner in Gegenwart von Wasser bei einer Temperatur zwischen 0 °C und 100 °C erfolgt und/oder
**dass** als Base ein Alkalihydroxid, Erdalkalihydroxid und/oder eine organische Base zugesetzt wird.

5. Verfahren nach Anspruch 3 oder 4, **dadurch gekennzeichnet,**
**dass** das komplexierte Metallsalz der allgemeinen Formel I auf dem Trägermaterial gewonnen und/oder abgeschieden wird, indem das Wasser entfernt oder es aus dem Wasser isoliert wird und/oder
**dass** als Trägermaterial ein organisches oder anorganisches Material oder ein Kompositmaterial oder ein organisch-anorganisches Hybridmaterial eingesetzt wird, vorzugsweise als Trägermaterial ein Silikat, Siliziumdioxid, Metalloxid, Ton, Glas, organisches Polymer, Aktivkohle, ein Zeolith oder ein Harz.

6. Zusammensetzung, enthaltend eine geträgerte Struktur, insbesondere ein komplexiertes Metallsalz auf einem Trägermaterial, nach einem der Ansprüche 1 oder 2, gegebenenfalls zusammen mit weiteren Hilfsstoffen und/oder Wirkstoffen.

7. Verwendung der geträgerten Struktur, insbesondere eines komplexiertes Metallsalz auf einem Trägermaterial, nach einem der Ansprüche 1 oder 2 oder der Zusammensetzung nach Anspruch 6 zur chemischen Bindung und/oder zur Adsorption von Schadstoffen und/oder geruchsbildenden Substanzen.

8. Verwendung der geträgerten Struktur, insbesondere eines komplexiertes Metallsalzes auf einem Trägermaterial, nach einem der Ansprüche 1 oder 2 oder der Zusammensetzung nach Anspruch 6 zur Behandlung und/oder Modifizierung von Verbindungen und/oder Zusammensetzungen.

## Claims

1. A supported structure for the chemical binding and/or adsorption of contaminants and/or odor-producing substances having electron donor characteristics, comprising a complexed metallic salt on a substrate,
wherein the complexed metallic salt corresponds to general formula I
[[Lₙ^{m'}(Me^{p+})]-Sₓ^{k-}]• zA^{y+} (I)
- with Me as metal, wherein Me = zinc;
- with p = 1 or 2, wherein p corresponds to the oxidation number of Me;
- with L as the ligand, wherein L is equal or different, with 1 ≤ n ≤ 20, wherein the ligand L is derived from a molecule of general formula II
B(R¹-D)_{I} (II)
• having a functional group D = -COOH and/or an anion or salt derived from the same, wherein m in formula I corresponds to the loading number of the functional group D as the anion or salt with m = 1, 2, 3, or 4, and I = 1 or 2, and
• wherein R¹ corresponds to an organic rest being functionalized with B, with R¹ = a substituted linear, branched, and/or cyclic alkyl, Alkenyl, alkyl aryl, aryl alkyl, alkenyl aryl group having 1 to 40 C atoms, wherein R¹ has at least one group B, and
• with B = OH, SO₃⁻, SO₃H, SO₄⁻, -OSO₃H, -COOH, -PO₃⁻, PO³H, PO₄⁻, PO₄H, -O- (alkyl-O-)ₐ-alkyl-OH with 1 ≤ a s 200, and alkyl = methyl, ethyl or propyl group, -SH, -SR, NO₂, NO₃, -NH₂, -NHR², -NR²₂, -NH₃⁺, - NH₂R²⁽⁺⁾, -NHR²₂⁽⁺⁾, -F, -Cl, -I, -Br, glycol, glycerin, polyglycol, and/or polyglycerin, and/or any anions or salts derived from the same, wherein R² is equal or different and corresponds to a linear, branched, and/or cyclic alkyl, Alkenyl, alkyl aryl group having 1 to 40 C atoms;
- having at least one chelating agent S, wherein S is selected from the group of water-soluble acids, anions, and/or salts of the bi-, tri-, polycarboxylic acids, bi-, tri-, polyphosphonic acids, bi-, tri-, polysulfonic acids, bi-, tri-, polysulfate, di-, tri-, polyphosphate, polyether carboxylic acids, and/or the mixed functional compounds of these acids, anions, and/or salts, with x = 1, 2, 3, or 4, and wherein k corresponds to the loading number of the anion of s, with 1 s k ≤ 20;
- wherein A is equal or different, and corresponds to a hydrogen proton, an organic cation, and/or a metallic cation, and, in particular, is an earth alkali or alkali metallic cation, with z = 1, 2, 3, or 4, and wherein y corresponds to the loading number of A, with y = 1 or 2, wherein the amount of x • k = z • y.
wherein the complexed metallic salt is water-soluble.

2. The supported structure, in particular complexed metallic salt, on a substrate according to claim 1, **characterized in that**
the complexed metallic salt is surface active, and/or
the complexed metallic salt is present as a solid, and/or
the substrate is an organic or inorganic material, or a composite material, or an organicinorganic hybrid material, in particular, wherein the substrate is a silicate, metal oxide, clay, glass, organic polymer, activated carbon, a zeolite, or a resin.

3. A method for the production of a supported structure, in particular of a complexed metallic salt on a substrate according to one of the claims 1 or 2,
**characterized in that**
a metallic salt of general formula II
[[Lₙ^{m-}(Me^{p+})] (III)
- with Me = zinc, and with p = 1 or 2, wherein p corresponds to the oxidation number of Me;
- with L as a ligand, wherein L is equal or different, with 1 ≤ n ≤ 20, wherein the ligand L is derived from a molecule of general formula II
B(R¹-D)_{I} (II)
• with a functional group D = -COOH, and/or an anion or salt derived from the same, wherein m in formula III of the loading number of the functional group D as an anion or in the salt corresponds to m = 1, 2, 3, or 4, and I = 1 or 2,
• wherein R¹ corresponds to an organic residue functionalized with B, with R¹ = substituted linear, branched, and/or cyclic alkyl, Alkenyl, alkyl aryl, aryl alkyl, alkenyl aryl group having 1 to 40 C atoms, wherein R¹ has at least one group B, in particular at a primary, secondary, and/or tertiary C atom,
• with B = OH, SO₃⁻, SO₃H, SO₄⁻, -OSO₃H, -COOH, -PO₃⁻, PO³H. PO₄⁻, PO₄H, -O- (alkyl-O-)ₐ-alkyl-OH with 1 ≤ a ≤ 200, and alkyl = methyl, ethyl or propyl group, -SH, -SR, NO₂, NO₃, -NH₂, -NHR², -NR²₂, -NH₃⁺, - NH₂R²⁽⁺⁾, -NHR²₂⁽⁺⁾, -F, -Cl, -I, -Br, glycol, glycerin, polyglycol, and/or polyglycerin, and/or any anions or salts derived from the same, wherein R² is equal or different and corresponds to a linear, branched, and/or cyclic alkyl, Alkenyl, alkyl aryl group having 1 to 40 C atoms,
having at least one chelating agent S, wherein S is selected from the group of water-soluble acids, anions, and/or salts of the bi-, tri-, polycarboxylic acids, bi-, tri-, polyphosphonic acids, bi-, tri-, polysulfonic acids, bi-, tri-, polysulfate, di-, tri-, polyphosphate, polyether carboxylic acids, and/or the mixed functional compounds of these acids, anions, and/or salts,
is converted in the presence of water, optionally in the presence of a base, and subsequently the complexed metallic salt of general formula I is obtained on a substrate.

4. The method according to claim 3, **characterized in that**
the conversion of the metallic salt with the chelating agent occurs in the presence of water at a temperature of between 0°C and 100°C, and/or
an alkali hydroxide, earth alkali hydroxide, and/or an organic base is added as the base.

5. The method according to claims 3 or 4, **characterized in that**
the complexed metallic salt of general formula I is obtained and/or separated on the substrate **in that** the water is removed, or it is isolated from the water, and/or
an organic or inorganic material, or a composite material, or an organic/inorganic hybrid material is utilized as the substrate, preferably a silicate, silicon dioxide, metal oxide, clay, glass, organic polymer, activated carbon, a zeolite, or a resin is utilized as the substrate.

6. A composition, comprising a supported structure, in particular a complexed metallic salt on a substrate, according to one of the claims 1 or 2, optionally in combination with additional adjuvants and/or active agents.

7. A use of the supported structure, in particular a complexed metallic salt on a substrate, according to one of the claims 1 or 2, or according to the composition according to claim 6 for the chemical binding and/or for the adsorption of contaminants and/or odor-producing substances.

8. The use of the supported structure, in particular of a complexed metallic salt on a substrate, according to one of the claims 1 or 2, or according to the composition according to claim 6 for the treatment and/or modification of compounds and/or compositions.

## Revendications

1. Structure supportée pour liaison chimique et/ou adsorption de polluants et/ou de substances génératrices d'odeurs présentant des propriétés de donneurs d'électrons, comprenant un sel métallique complexé sur un matériau support,
le sel métallique complexé correspondant à la formule générale I
[[Lₙ^{m-}(Me^{p+})]-Sₓ^{k-}]•zA^{y+} (I)
- avec Me en tant que métal, où Me = zinc ;
- avec p = 1 ou 2, p correspondant au nombre d'oxydation de Me ;
- avec L en tant que ligand, les L étant identiques ou différents, avec 1 ≤ n ≤ 20, le ligand L dérivant d'une molécule de formule générale II
B(R¹-D)₁ (II)
• avec un groupe fonctionnel D = -COOH ou un anion ou un sel qui en dérive, m, dans la formule I, correspondant au nombre de charge du groupe fonctionnel D en tant qu'anion ou dans le sel avec m = 1, 2, 3 ou 4, et 1 = 1 ou 2, et
• R¹ correspond à un radical organique fonctionnalisé avec B, avec R¹ = un groupe alkyle, alcényle, alkylaryle, arylalkyle, alcénylaryle à chaîne droite ou ramifiée, et/ou cyclique, substitué, ayant 1 à 40 atomes de carbone, R¹ comportant au moins un groupe B, et
• avec B = OH, SO₃-, SO₃H, SO₄⁻, -OSO₃H, -COOH, -PO₃⁻, PO₃H, PO₄⁻, PO₄H, -O-(alkyl-O-)ₐ-alkyl-OH avec 1 ≤ a ≤ 200, et alkyle est un groupe méthyle, éthyle ou propyle, -SH, -SR, NO₂, NO₃, - NH₂, -NHR², -NR²₂, -NH₃⁺, -NH₂R²⁽⁺⁾, -NHR²₂⁽⁺⁾, -F, -Cl, -I, -Br, le glycol, le glycérol, le polyglycol et/ou le polyglycérol, et/ou les anions ou sels qui en dérivent, les R² étant identiques ou différents et correspondant à un groupe alkyle, alcényle, alkylaryle à chaîne droite ou ramifiée, et/ou cyclique, ayant 1 à 40 atomes de carbone ;
- avec au moins un complexant S, S étant choisi dans le groupe des acides solubles dans l'eau, des anions et/ou des sels des acides bi-, tri-, polycarboxyliques, des acides bi-, tri-, polyphosphoniques, des acides bi-, tri-, polysulfoniques, des bi-, tri-, polysulfates, des di-, tri-, polyphosphates, des acides polyéthercarboxyliques et/ou des composés à fonctionnalité mixte de ces acides, des anions et/ou sels avec x
- 1, 2, 3 ou 4, k correspondant au nombre de charge de l'anion de S, avec 1 ≤ k ≤ 20 ;
- les A est identiques ou différents et correspond à un proton hydrogène, un cation organique et/ou un cation métallique, en particulier un cation d'un métal alcalino-terreux ou alcalin, avec z = 1, 2, 3 ou 4, et y correspondant au nombre de charge de A avec y = 1 ou 2, x • k étant égal à z • y,
le sel métallique complexé étant soluble dans l'eau.

2. Structure supportée, en particulier sel métallique complexé sur un matériau support, selon la revendication 1, **caractérisée en ce que**,
le sel métallique complexé est tensioactif et/ou
le sel métallique complexé se présente sous forme d'un solide et/ou
le matériau support est un matériau organique ou inorganique ou un matériau composite ou un matériau hybride organique-inorganique, en particulier le matériau support est un silicate, le dioxyde de silicium, un oxyde métallique, l'argile, le verre, un polymère organique, du charbon actif, une zéolite ou une résine.

3. Procédé de fabrication d'une structure supportée, en particulier d'un sel métallique complexé sur un matériau support selon l'une des revendications 1 ou 2, **caractérisé en ce qu'**on fait réagir un sel métallique de formule générale III
[[Lₙ^{m-} (Me^{p+})] (III)
- avec Me = zinc et p = 1 ou 2, p correspondant au nombre d'oxydations de Me ;
- avec L en tant que ligand, les L étant identiques ou différents, avec 1 ≤ n ≤ 20, le ligand L dérivant d'une molécule de formule générale II
B (R¹-D)₁ (II)
• avec un groupe fonctionnel D = -COOH ou un anion ou un sel qui en dérive, m, dans la formule III, correspondant au nombre de charge du groupe fonctionnel D en tant qu'anion ou dans le sel avec m = 1, 2, 3 ou 4, et 1 = 1 ou 2, et
• R¹ correspondant à un radical organique fonctionnalisé avec B, avec R¹ - = un groupe alkyle, alcényle, alkylaryle, arylalkyle, alcénylaryle à chaîne droite ou ramifiée, et/ou cyclique, substitué, ayant 1 à 40 atomes de carbone, R¹ comportant au moins un groupe B, en particulier sur un atome de carbone primaire, secondaire et/ou tertiaire,
• avec B = OH, SO₃⁻, SO₃H, SO₄⁻, -OSO₃H, -COOH, -PO₃⁻, PO₃H, PO₄⁻, PO₄H, -O-(alkyl-O-)ₐ-alkyl-OH avec 1 ≤ a ≤ 200, et alkyle est un groupe méthyle, éthyle ou propyle, -SH, -SR, NO₂, NO₃, - NH₂, -NHR², -NR²₂, -NH₃⁺, -NH₂R²⁽⁺⁾, -NHR²₂⁽⁺⁾, -F, -Cl, -I, -Br, le glycol, le glycérol, le polyglycol et/ou le polyglycérol, et/ou les anions ou sels qui en dérivent, les R² étant identiques ou différents et correspondant à un groupe alkyle, alcényle, alkylaryle à chaîne droite ou ramifiée, et/ou cyclique, ayant 1 à 40 atomes de carbone ;
avec au moins un complexant S, S étant choisi dans le groupe des acides solubles dans l'eau, des anions et/ou des sels des acides bi-, tri-, polycarboxyliques, des acides bi-, tri-, polyphosphoniques, des acides bi-, tri-, polysulfoniques, des bi-, tri-, polysulfates, des di-, tri-, polyphosphates, des acides polyéthercarboxyliqiues et/ou des composés à fonctionnalité mixte des acides et/ou sels,
en présence d'eau, éventuellement en présence d'une base, puis on récupère sur un matériau support le sel métallique complexé de formule générale I.

4. Procédé selon la revendication 3, **caractérisé en ce que** la réaction du sel métallique avec le complexant a lieu en présence d'eau à une température comprise entre 0 et 100°C, et/ou que l'on ajoute en tant que base un hydroxyde d'un métal alcalin, un hydroxyde d'un métal alcalino-terreux ou une base organique.

5. Procédé selon la revendication 3 ou 4, **caractérisé en ce que**
on récupère et/ou on dépose sur le matériau support le sel métallique complexé de formule générale I, en éliminant l'eau, ou en l'isolant de l'eau, et/ou
on utilise en tant que matériau support un matériau organique ou inorganique ou un matériau composite ou un matériau hybride organique-inorganique, de préférence en tant que matériau support un silicate, du dioxyde de silicium, un oxyde métallique, de l'argile, du verre, un polymère organique, du charbon actif, une zéolite ou une résine.

6. Composition contenant une structure supportée, en particulier un sel métallique complexé sur un matériau support, selon l'une des revendications 1 ou 2, éventuellement en même temps que des adjuvants et/ou matières actives supplémentaires.

7. Utilisation de la structure supportée, en particulier d'un sel métallique complexé sur un matériau support, selon l'une des revendications 1 ou 2, ou de la composition selon la revendication 6, pour la liaison chimique et/ou pour l'adsorption de polluants et/ou de substances génératrices d'odeurs.

8. Utilisation de la structure supportée, en particulier d'un sel métallique complexé sur un matériau support, selon l'une des revendications 1 ou 2, ou de la composition selon la revendication 6, pour le traitement et/ou la modification de composés et/ou de compositions.
